# EUROPÄISCHE PATENTSCHRIFT

(11) **EP 1 961 300 B1**
(45) Veröffentlichungstag und Bekanntmachung des Hinweises auf die Patenterteilung: **30.03.2011**
(21) Anmeldenummer: 08002894.7
(22) Anmeldetag: 15.02.2008
(51) Int. Cl.: A01M 7/00

(54) **Feldspritze**
Agricultural sprayer
Pulvérisateur agricole

(30) Priorität: 22.02.2007 DE 102007008787
(43) Veröffentlichungstag der Anmeldung: 27.08.2008
(73) Patentinhaber: Amazonen-Werke H. Dreyer GmbH & Co. KG, 49205 Hasbergen (DE)
(72) Erfinder: Ehlen, Volker, 49205 Hasbergen (DE); Marquering, Johannes Dr., 49176 Hilter (DE)
(74) Vertreter: Grünecker, Kinkeldey, Stockmair & Schwanhäusser Anwaltssozietät

(56) Entgegenhaltungen:
- EP-A- 0 118 366
- DE-A1- 4 327 199
- DE-U1- 20 314 305
- GB-A- 2 413 512
- US-A- 4 616 298

## Beschreibung

Die Erfindung betrifft eine Feldspritze gemäß des Oberbegriffes des Patentanspruches 1.

Derartige Feldspritzen sind bekannt, siehe z.B. EP-A-0118366. Sie werden in der Landwirtschaft zum Ausbringen von Pflanzenschutzmitteln eingesetzt und weisen ein sich quer zur Fahrtrichtung erstreckendes Verteilergestänge auf. Derartige Verteilergestänge erreichen derzeit Arbeitsbreiten bis zu 42m. An diesen Verteilergestängen sind beabstandet zueinander Verteilerdüsen angeordnet. Um wirtschaftlich arbeiten zu können, müssen mit der Feldspritze die Ausbringarbeiten auch bei Dunkelheit durchgeführt werden. Nur so ist genügend Ausbringzeit vorhanden. Dies ist darauf zurückzuführen, dass während des Tages, insbesondere bei Sonnenschein über die Mittagsstunden keine Pflanzenschutzmittel sinnvoll ausgebracht werden können, weil es dann zu Beschädigungen an den Blättern und den Pflanzen selber kommt. Die Flüssigkeitstropfen wirken dann wie optische Linsen, so dass es zu Verbrennungen an den Pflanzen kommt.

Um während der Ausbringarbeit, auch bei Dunkelheit erkennen können, ob aus jeder Verteilerdüse in gewünschter Weise Flüssigkeit ausgebracht wird und wie weit das Verteilergestänge reicht. Letzteres ist wichtig, um erkennen zu können, ob das Verteilergestänge mit evtl. Hindernissen auf dem zu bearbeitenden Feld kollidiert.

Bisher hat man sich damit beholfen, an dem Schlepper oder der Feldspritze selbst lichtstarke Scheinwerfer anzubringen, um das Verteilergestänge selbst und den von den Verteilerdüsen ausgestoßenen Flüssigkeitsfächer zu erkennen. Diese Anstrahlung des Verteilergestänges und der Flüssigkeitsfächer aus der Ferne durch die vorbezeichneten Scheinwerfer ist jedoch unbefriedigend und sehr energieaufwendig.

Der Erfindung liegt die Aufgabe zugrunde, in einfacher Weise den von den Verteilerdüsen ausgestoßenen Flüssigkeitsfächer auch bei Dunkelheit in einfacher und sicherer Weise für den Fahrer der Feldspritze sichtbar zu machen.

Diese Aufgabe wird erfindungsgemäß durch das Kennzeichen des Patentanspruches 1 gelöst. Infolge dieser Maßnahmen werden die von den Verteilerdüsen erzeugten Flüssigkeitsfächer direkt von den an den Verteilerdüsen angeordneten Lichtquellen beleuchtet. Somit sind sie sehr gut von dem Fahrer zu erkennen. Diese Lichtquellen sind optimal für die Beleuchtung der Flüssigkeitsfächer auszulegen. Weiterhin kann der Fahrer durch die Anordnung der Lichtquellen an den Verteilerdüsen erkennen, insbesondere wenn auch den äußersten Verteilerdüsen Lichtquellen zugeordnet sind, wie weit das Verteilergestänge reicht, um so abzuschätzen, ob das Verteilergestänge mit evtl. sich im Arbeitsbereich befindlichen Hindernissen kollidiert. Vorteilhaft ist allen Verteilerdüsen eine Lichtquelle zugeordnet, so dass der Fahrer erkennen kann, ob auch aus allen Verteilerdüsen Flüssigkeit austritt.

Besonders vorteilhaft ist die Ausgestaltung der Lichtquelle als Leuchtdiode (LED). Hierdurch kann mit äußerst geringem Energieaufwand eine ausreichend starke Beleuchtung des Flüssigkeitsfächers erzeugt werden. Darüber hinaus sind LED's sehr stoßunempfindlich und leicht.

Durch die Verwendung von sehr lichtgewichtigen und wenig energieverbrauchenden LED's lassen sich in einfacher Weise Lichtquellen zum Beleuchten der Spritzfächer an einem Spritzgestänge einer Feldspritze angeordnet, ohne dass das Schwingungsverhalten des Spritzgestänges durch zusätzliche Masse, sowie die Energieversorgung der Feldspritzgestänge oder des die Feldspritze ziehenden Ackerschleppers negativ beeinflusst wird.

Um eine automatische Überwachung des Flüssigkeitsfächers bzw. der Ausbringung von Flüssigkeit zu realisieren, ist vorgesehen, dass den Lichtquellen jeweils eine die von dem Flüssigkeitsfächer reflektierten Lichtstrahlen empfangende Sensoreinheit zugeordnet ist. Hierdurch ist es möglich, die entsprechenden Signale an eine elektronische Überwachungseinheit zu übermitteln, so dass eine automatische Überwachung möglich und entsprechende Anzeigen und Alarme zu realisieren sind.

Um den Flüssigkeitsfächer durch die Lichtquelle entsprechend sichtbar zu machen, kann der Lichtkegel entsprechend der Ansprüche 5 oder 6 ausgerichtet sein. Hierbei ist besonders vorteilhaft, wenn der Lichtkegel der Lichtquelle den Flüssigkeitsfächer schneidet.

Je nach Einsatzfall kann die Lichtquelle in Fahrtrichtung gesehen vor oder hinter dem Flüssigkeitsfächer und der Verteilerdüse angeordnet sein.

Eine besonders einfache und kostengünstige sowie geschützte Anordnung der Lichtquelle lässt sich dadurch verwirklichen, dass die Lichtquelle in integrierter Weise in dem Gehäuse der Verteilerdüse angeordnet ist.

Um möglichst einfach die Lichtquelle ein- und auszuschalten sowie den Energieverbrauch zu optimieren, ist vorgesehen, dass die Lichtquelle zumindest annähernd gleichzeitig mit der Flüssigkeitszufuhr zu der Verteilerdüse ein- und ausgeschaltet wird.

Auch ist es möglich, die Leuchtdiode in einem separaten Gehäuse zu dem Gehäuse der Verteilerdüse anzuordnen.

Wenn die Verteilerdüsen gruppenweise in Teilbreiten zu schalten sind, ist eine optimierte Schaltung der Lichtquellen dadurch zu verwirklichen, dass jeweils mit dem Schalten des Ventils einer Teilbreite die dieser Teilbreite jeweils zugeordneten Lichtquellen über eine Schalteinrichtung ein- und ausgeschaltet werden.

Eine einfache Spannungsversorgung für die Lichtquellen ist dadurch zu erreichen, dass die Spannungsversorgung der Lichtquelle parallel zu der den Verteilerdüsen zugeordneten Versorgungsspannungsleitung ausgebildet ist.

Eine besonders vorteilhafte Schaltung und Energieversorgung der Lichtquellen lässt sich dadurch realisieren, dass den Verteilerdüsen Schalteinrichtungen zugeordnet sind, die über ein Bussystem, wie beispielsweise CAN-Bus ansteuerbar sind, dass die Steuerung der Beleuchtung über das Bussystem, wie beispielsweise den CAN-Bus erfolgt.

Die Lichtquelle kann in integrierter Weise in dem Gehäuse derart angeordnet sein, dass sie vor oder hinter den Flüssigkeitsfächer erzeugenden Düse angeordnet ist. Es ist jedoch auch möglich, dass die Lichtquelle mehrere Leuchtdioden aufweist, die um die Düse herum angeordnet sind, um so den Flüssigkeitsfächer mehrseitig anzuleuchten.

Weitere Einzelheiten der Erfindung sind der Beispielsbeschreibung und den Zeichnungen zu entnehmen.
Hierbei zeigen
- Fig. 1: ein Segment eines Spritzgestänges eines Verteilergestänges mit den von den Spritzdüsen ausgestoßenen Spritzfächern in Prinzipdarstellung in der Ansicht von hinten,
- Fig. 2: das Gestängesegment nach Fig. 1 mit den beleuchteten Spritzfächern in Prinzipdarstellung,
- Fig. 3: die Ausbildung eines Spritzfächers mit Leuchtkegel am Beispiel eines Düsenkörpers in perspektivischer Darstellung von seitlich hinten gesehen,
- Fig. 4: die Ausbildung eines Spritzfächers mit Leuchtkegel am Beispiel eines Düsenkörpers in perspektivischer Darstellung von seitlich hinten gesehen,
- Fig. 5: das Gestängesegment nach Fig. 1 mit beleuchteten Spritzfächern in Prinzipdarstellung,
- Fig. 6: die Ausbildung eines Spritzfächers mit Leuchtkegel am Beispiel eines Düsenkörpers nach Fig. 5 in perspektivischer Darstellung.

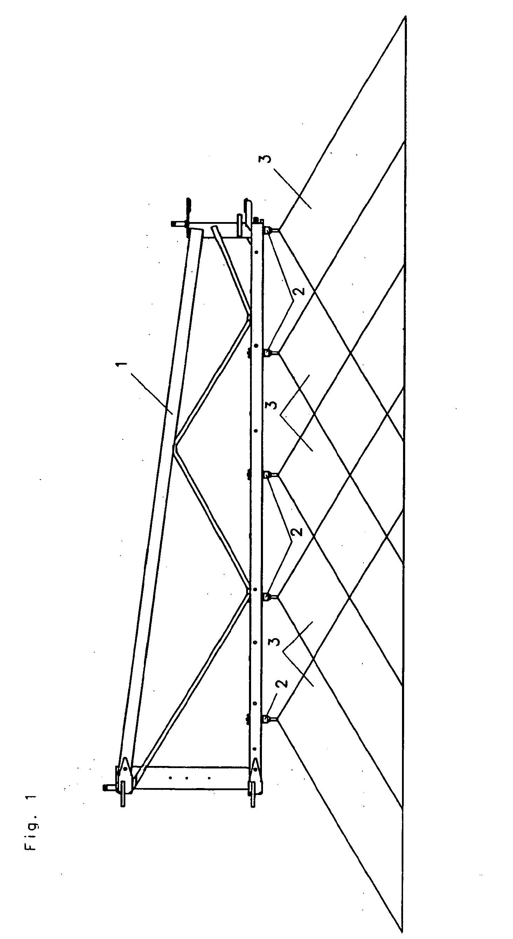

Die nicht dargestellte Feldspritze weist einen Rahmen, Vorratsbehälter, Dosiereinrichtung und ein Verteilergestänge auf. Das Verteilergestänge weist mehrere zueinander ein- und ausfaltbare Segmente auf. In Fig. 1 ist ein Segment 1 dargestellt. An den Segmenten 1 des Verteilergestänges sind beabstandet zueinander mehrere Verteilerdüsen 2 angeordnet.

Diesen Verteilerdüsen 2 werden über nicht dargestellte Leitungen über die nicht dargestellte Dosiereinrichtung die sich im Vorratsbehälter befindlichen auszubringenden Flüssigkeiten zugeführt. Diese Flüssigkeiten werden von den Verteilerdüsen 2 in Form der einander sich überlappenden Spritzfächer 3 ausgebracht, wie in Fig. 1 dargestellt ist.

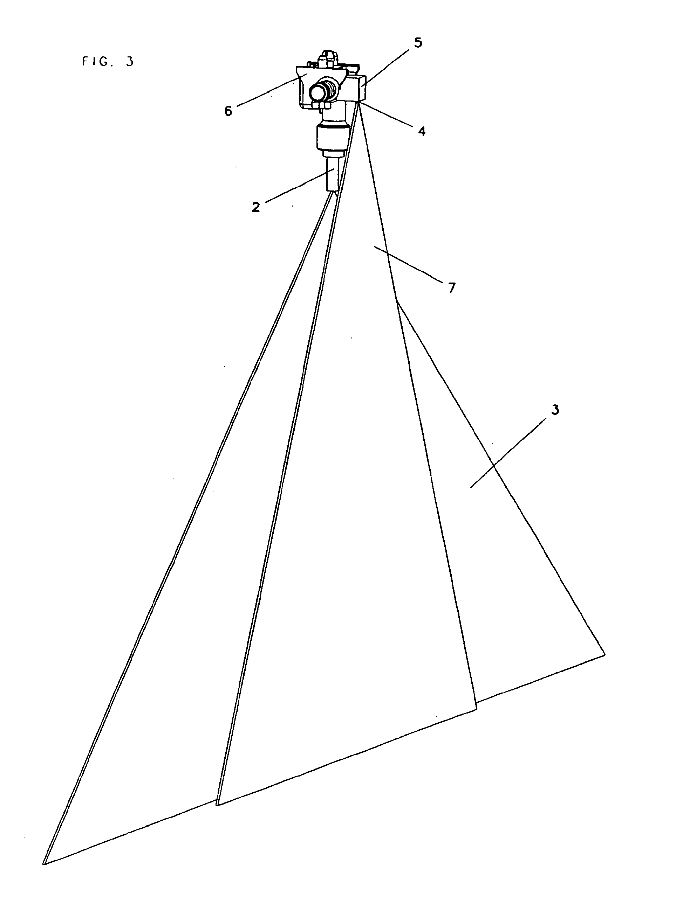

Während der Ausbringarbeit wird den Spritzdüsen 2 Flüssigkeit unter Druck zugeleitet. Der aus den Düsenöffnungen der Düsen 2 austretende Flüssigkeitsstrom wird durch die Düsen in Tröpfchen zersträubt und tritt in Form der in Fig. 1 dargestellten Spritzfächer 3 aus. Um diese Spritzfächer 3 nun bei Dunkelheit oder in der Dämmerung für den Fahrer in einfacher Weise sichtbar zu machen, sind im Bereich der Verteilerdüsen 2 an diesen Lichtquellen 4 angebracht, wie die Fig. 3 zeigt. Diese Lichtquellen 4 sind als Leuchtdioden (LED) ausgebildet. Die Leuchtdioden 4 können in einem separaten Gehäuse 5 zu dem Gehäuse 6 der Verteilerdüsen 2 wie in Fig. 3, oder in dem Gehäuse 6 der Verteilerdüse 5 in integrierter Weise angeordnet sein. Die Energieversorgung der Leuchtdioden 4 findet in nicht dargestellter Weise durch separat zu den den Verteilerdüsen 2 führenden Versorgungsleitung als Spannungsleitung ausgebildete Leitungen statt. Auch können den Verteilerdüsen 2 Schalteinrichtungen zugeordnet sein, die über ein Bus-System, wie beispielsweise CAN-Bus ansteuerbar sind. Die Steuerung der Beleuchtung der LED's 4 erfolgt dann über das Bus-System, beispielsweise über den CAN-Bus.

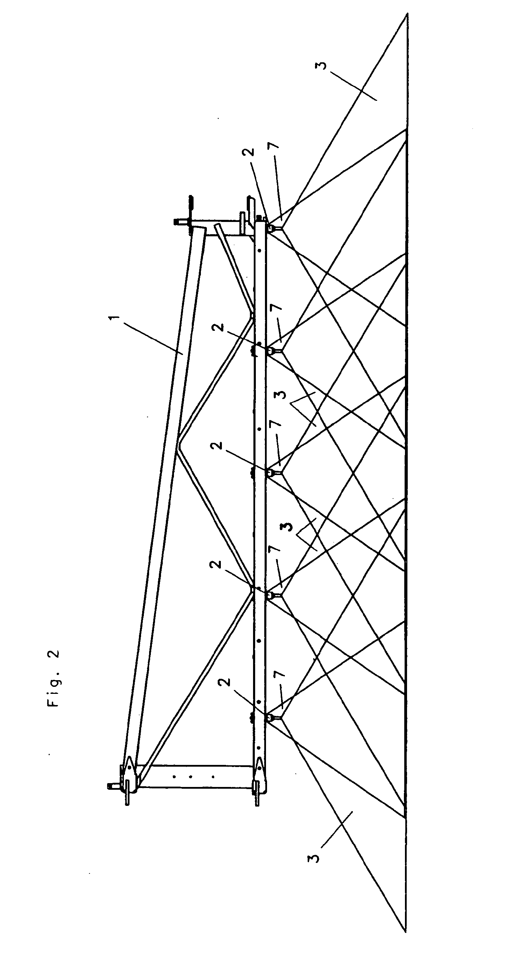

Der Lichtkegel 7 entsprechend Fig. 3 ist parallel zu dem Flüssigkeitsfächer 3 ausgerichtet. Hierbei ist die Lichtquelle 4 entweder vor oder hinter dem Flüssigkeitsfächer 3 angeordnet, so dass der Fahrer den Flüssigkeitsfächer 3 erkennen kann. Durch die Beleuchtung der Spritzfächer3 kann der Fahrer feststellen, ob aus jeweiligen Düsen Flüssigkeit ausgebracht wird. Darüber hinaus kann der Fahrer erkennen, wie weit das Spritzgestänge jeweils nach außen reicht. Wie die Fig. 2 und Fig. 3 zeigen, ist der Lichtkegel 7 kleiner als der Streufächerkegel 3 ausgebildet.

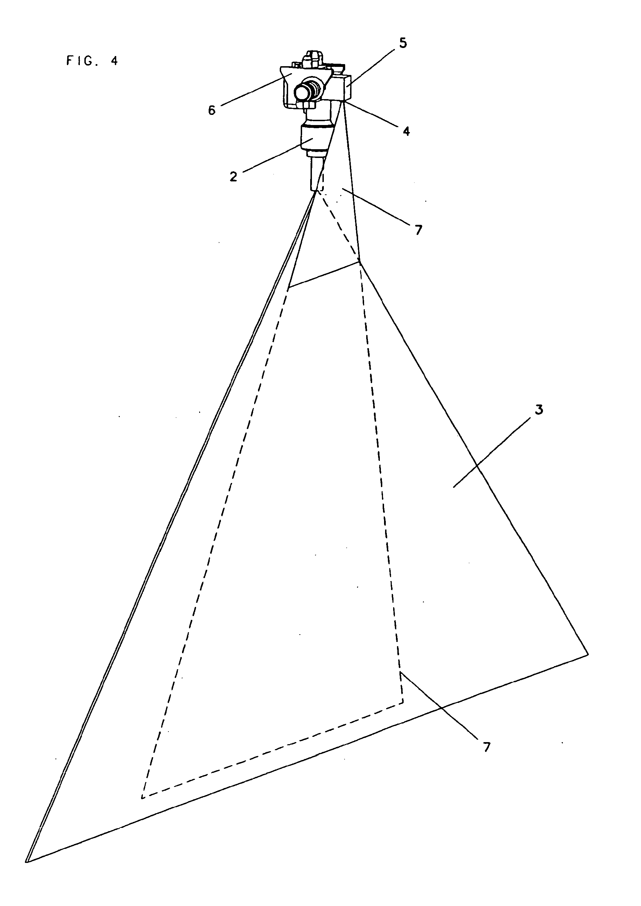

Entsprechend Fig. 4 ist gezeigt, dass der Lichtkegel 7 so ausgerichtet ist, dass er den Flüssigkeitsfächer 3 schneidet und hierdurch eine bessere Beleuchtung des Flüssigkeitsfächers 3 auch für sich schlecht beleuchtende lassende Flüssigkeitsfächer (3) möglich ist.

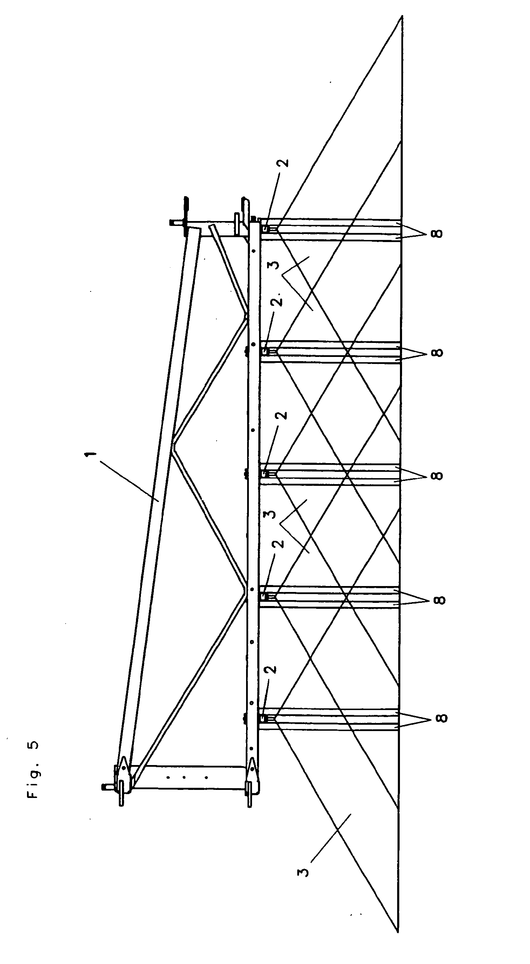

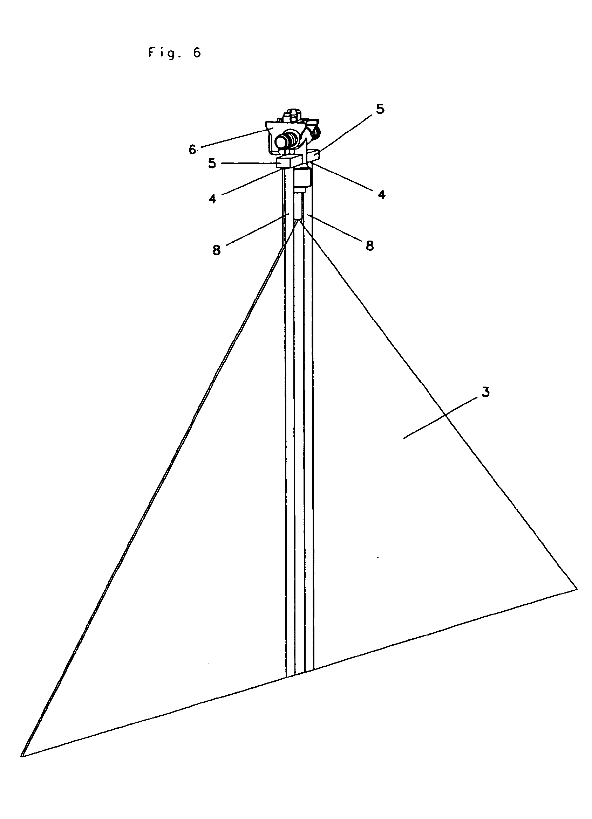

Nach dem Ausführungsbeispiel der Fig. 5 und 6 sind die Lichtquellen 4, hier LED's fluchtend zu den Verteilerdüsen 2 angeordnet, wobei jeder Verteilerdüse 2 zwei Leuchtdioden 2 zugeordnet sind. Es ist jeweils eine Leuchtdiode 4 auf jeder Seite der Verteilerdüsen 2 angeordnet. Hierdurch schneiden die Lichtstrahlen 8 der Leuchtdiode 4 ebenfalls wiederum die Spritzfächer 3. Hierdurch werden diese beleuchtet und sind von dem Fahrer entsprechend sichtbar, so dass er feststellen kann, ob aus der jeweiligen Düse Flüssigkeit ausgebracht wird. Darüber hinaus kann er erkennen, wie weit das Spritzgestänge jeweils nach außen ragt.

In nicht dargestellter Weise kann den einzelnen Lichtquellen und Flüssigkeitsfächern eine von dem Flüssigkeitsfächern reflektierten Lichtstrahlen empfangene Sensoreinheit zugeordnet sein. Über diese Sensoreinheit werden dann entsprechende Signale an eine elektronische Überwachungseinrichtung übermittelt. Mittels dieser übermittelten Signale und der Überwachungseinheit kann dann eine automatische Überwachung der ausgebrachten Flüssigkeit und entsprechendes Anzeigen und das Auslösen von Alarmen realisiert werden.

## Patentansprüche

1. Feldspritze mit einem Rahmen, Vorratsbehälter, Dosiereinrichtung und an einem Verteilergestänge beabstandet zueinander angeordneten Verteilerdüsen (2), **dadurch gekennzeichnet, dass** zumindest einigen der Verteilerdüsen eine den von den Verteilerdüsen ausgestoßenen Flüssigkeitsfächer (3) beleuchtende Lichtquelle (4) zugeordnet ist.

2. Feldspritze nach Anspruch 1, **dadurch gekennzeichnet, dass** allen Verteilerdüsen (2) eine Lichtquelle (4) zugeordnet ist.

3. Feldspritze nach Anspruch 1, **dadurch gekennzeichnet, dass** die jeweilige Lichtquelle eine Leuchtdiode, wie LED ist.

4. Feldspritze nach Anspruch 1, **dadurch gekennzeichnet, dass** den Lichtquellen (4) jeweils eine die von den Flüssigkeitsfächern (3) reflektierten Lichtstrahlen (4) empfangende Sensoreinheit zugeordnet ist.

5. Feldspritze nach Anspruch 1, **dadurch gekennzeichnet, dass** der Lichtkegel (7) der Lichtquelle (4) den Flüssigkeitsfächer (3) schneidet.

6. Feldspritze nach Anspruch 1, **dadurch gekennzeichnet, dass** der Lichtkegel (7) der Lichtquelle (4) zumindest annähernd parallel zum Flüssigkeitsfächer (3) ausgerichtet ist.

7. Feldspritze nach Anspruch 1, **dadurch gekennzeichnet, dass** die Lichtquelle (4) in Fahrtrichtung gesehen vor oder hinter dem Flüssigkeitsfächer (3) und/oder der Verteilerdüse (2) angeordnet ist.

8. Feldspritze nach Anspruch 1, wobei die Verteilerdüse in einem Gehäuse angeordnet ist, **dadurch gekennzeichnet, dass** die Lichtquelle (4) in integrierter Weise in dem Gehäuse (6) der Verteilerdüse (2) angeordnet ist.

9. Feldspritze nach einem oder mehreren der vorstehenden Ansprüche, **dadurch gekennzeichnet, dass** die Lichtquelle (4) zumindest annähernd gleichzeitig mit der Flüssigkeitszufuhr zu der Verteilerdüse (2) ein- und ausgeschaltet wird.

10. Feldspritze nach Anspruch 1, wobei die Verteilerdüsen in einem Gehäuse angeordnet sind, **dadurch gekennzeichnet, dass** die Leuchtdiode (4) in einem separaten Gehäuse (5) zu dem Gehäuse (6) der Verteilerdüse (2) angeordnet ist.

11. Feldspritze nach einem oder mehreren der vorstehenden Ansprüche, wobei die verteilerdüsen zu gruppenweise in Teilbreiten zu schaltende Bereiche zusammengefasst sind, wobei jeder Gruppe von Verteilerdüsen ein schaltbares Ventil zugeordnet ist, **dadurch gekennzeichnet, dass** jeweils mit dem Schalten des Ventils einer Teilbreite die dieser Teilbreite jeweils zugeordneten Lichtquellen (4) über eine Schalteinrichtung ein- und ausgeschaltet werden.

12. Feldspritze nach einem oder mehreren der vorstehenden Ansprüche, **dadurch gekennzeichnet, dass** die Spannungsversorgung der Lichtquelle (4) parallel zu der den Verteilerdüsen (2) zugeordneten Versorgungsspannungsleitung ausgebildet ist.

13. Feldspritze nach einem oder mehreren der vorstehenden Ansprüche, **dadurch gekennzeichnet, dass** den Verteilerdüsen (2) Schalteinrichtungen zugeordnet sind, die über ein Bussystem, wie beispielsweise CAN-Bus ansteuerbar sind, dass die Steuerung der Beleuchtung über das Bussystem, wie beispielsweise den CAN-Bus erfolgt.

## Claims

1. Agricultural sprayer with a frame, supply container, dosing device and spraying nozzles (2) spaced apart on a distribution frame, **characterised by** a light source (4) being assigned to at least some of the spraying nozzles and illuminating the liquid fans (3), which are ejected by the spraying nozzles.

2. Agricultural sprayer according to claim 1, **characterised by** a light source (4) being assigned to all spraying nozzles (2).

3. Agricultural sprayer according to claim 1, **characterised by** the respective light source being a light emitting diode, like a LED.

4. Agricultural sprayer according to claim 1, **characterised by** a sensor unit, which receives light rays (4) reflected from the liquid fans (3), being assigned to each of the light sources (4).

5. Agricultural sprayer according to claim 1, **characterised by** the light cone (7) of the light source (4) intersecting the liquid fan (3).

6. Agricultural sprayer according to claim 1, **characterised by** the light cone (7) of the light source (4) being aligned approximately parallel to the liquid fan (3).

7. Agricultural sprayer according to claim 1, **characterised by** the light source (4) being arranged in front of or behind the liquid fan (3) and/or the spraying nozzle (2) when viewed in the direction of driving.

8. Agricultural sprayer according to claim 1, wherein the spraying nozzle is arranged in a housing, **characterised by** the light source (4) being arranged in integrated fashion in the housing (6) of the spraying nozzle (2).

9. Agricultural sprayer according to one or more of the preceding claims, **characterised by** the light source (4) being switched on and off at least approximately simultaneously with the liquid supply to the spraying nozzle (2).

10. Agricultural sprayer according to claim 1, wherein the spraying nozzles are arranged in a housing, **characterised by** the light emitting diode (4) being arranged in a separate housing (5) to the housing (6) of the spraying nozzle (2).

11. Agricultural sprayer according to one or more of the preceding claims, wherein the spraying nozzles are grouped into partial width sectors switchable in groups, wherein a switchable valve is assigned to each group of spraying nozzles, **characterised by** the light sources (4), which are respectively assigned to this partial width, being switched on and off via a switching device together with the switching of the valve of the partial width.

12. Agricultural sprayer according to one or more of the preceding claims, **characterised by** the power supply of the light source (4) being designed in parallel to the power supply line which is assigned to the spraying nozzles (2).

13. Agricultural sprayer according to one or more of the preceding claims, **characterised by** the spraying nozzles (2) being assigned switching devices, which can be controlled via a bus system like for instance a CAN bus, and in that control of the illumination is done via the bus system, like for instance the CAN bus.

## Revendications

1. Pulvérisateur à cultures, comprenant un cadre, un réservoir de stockage, un dispositif de dosage et des tuyères de distribution (2) agencées à distance l'une de l'autre sur une tringle de distribution, **caractérisé en ce qu'**une source de lumière (4) éclairant l'éventail de liquide (3) éjecté par les tuyères de distribution est affectée à au moins certaines des tuyères de distribution.

2. Pulvérisateur à cultures selon la revendication 1, **caractérisé en ce qu'**une source de lumière (4) est affectée à toutes les tuyères de distribution (2).

3. Pulvérisateur à cultures selon la revendication 1, **caractérisé en ce que** la source de lumière respective est une diode électroluminescente telle qu'une DEL.

4. Pulvérisateur à cultures selon la revendication 1, **caractérisé en ce qu'**une unité de capteur recevant les rayons lumineux (4) réfléchis par les éventails de liquide (3) est affectée respectivement aux sources de lumière (4).

5. Pulvérisateur à cultures selon la revendication 1, **caractérisé en ce que** le cône de lumière (7) de la source de lumière (4) coupe l'éventail de liquide (3).

6. Pulvérisateur à cultures selon la revendication 1, **caractérisé en ce que** le cône de lumière (7) de la source de lumière (4) est orientée au moins à peu près parallèlement à l'éventails de liquide (3).

7. Pulvérisateur à cultures selon la revendication 1, **caractérisé en ce que** la source de lumière (4), observée dans le sens de marche, est agencée devant ou derrière l'éventail de liquide (3) et/ou la tuyère de distribution (2).

8. Pulvérisateur à cultures selon la revendication 1, dans lequel la tuyère de distribution est agencée dans un boîtier, **caractérisé en ce que** la source de lumière (4) est agencée de manière intégrée dans le boîtier (6) de la tuyère de distribution (2).

9. Pulvérisateur à cultures selon une quelconque ou plusieurs des revendications précédentes, **caractérisé en ce que** la source de lumière (4) est allumée ou éteinte au moins presque en même temps que l'alimentation en liquide à la tuyère de distribution (2).

10. Pulvérisateur à cultures selon la revendication 1, dans lequel les tuyères de distribution sont agencées dans un boîtier, **caractérisé en ce que** la diode électroluminescente (4) est agencée dans un boîtier séparé (5) par rapport au boîtier (6) de la tuyère de distribution (2).

11. Pulvérisateur à cultures selon une quelconque ou plusieurs des revendications précédentes, dans lequel les tuyères de distribution sont réunies en zones à commuter par groupe dans des largeurs partielles, une soupape commutable étant affectée à chaque groupe de tuyères de distribution, **caractérisé en ce qu'**en commutant respectivement la soupape d'une largeur partielle, les sources de lumière (4) affectées respectivement à cette largeur partielle sont allumées et éteintes via un dispositif de commutation.

12. Pulvérisateur à cultures selon une quelconque ou plusieurs des revendications précédentes, **caractérisé en ce que** l'alimentation en tension de la source de lumière (4) est formée en parallèle avec la ligne de tension d'alimentation affectée aux tuyères de distribution (2).

13. Pulvérisateur à cultures selon une quelconque ou plusieurs des revendications précédentes, **caractérisé en ce que** l'on affecte aux tuyères de distribution (2) des dispositifs de commutation qui peuvent être commandés par un système de bus, tel qu'un bus de type CAN, et **en ce que** la commande de l'éclairage s'effectue par le système de bus, tel que le bus de type CAN.
